# DEMANDE DE BREVET EUROPEEN

(11) **EP 0 859 526 A1**
(43) Date de publication de la demande: **19.08.1998**
(21) Numéro de dépôt: 98400088.5
(22) Date de dépôt: 19.01.1998
(51) Int. Cl.: H04Q 1/14

(54) **Panneau modulaire de brassage, pour réseaux de données**

(30) Priorité: 23.01.1997 FR 9700683
(71) Demandeur: ALCATEL ALSTHOM COMPAGNIE GENERALE D'ELECTRICITE, 75008 Paris (FR)
(72) Inventeur: Lecomte, Didier, 84300 Cavaillon (FR)
(74) Mandataire: Buffière, Michelle

(57) **Abrégé**

Le panneau modulaire de brassage, pour lignes de câbles de réseaux câblés, comporte un ensemble support, définissant une partie avant verticale et une partie arrière horizontale, et des connecteurs femelles retenus sur la partie avant et reliés aux lignes des câbles fixés sur la partie arrière.

Il est caractérisé en ce que ledit ensemble support comporte deux supports rigides (10,2) séparés et dits avant et arrière et deux colonnes d'assemblage (3) fixées au support avant et assurant le maintien amovible du support arrière. Application : répartiteur d'exploitation de réseaux câblés.

## Description

La présente invention concerne l'exploitation de réseaux de données câblés dans des immeubles. Elle porte plus particulièrement sur un panneau de brassage, utilisé dans un répartiteur pouvant se présenter sous forme d'armoire murale ou de châssis ou baie, pour cette exploitation des réseaux de données initialement câblés.

Dans de tels réseaux de données vidéo et/ou informatiques et/ou téléphoniques, on désignera ci-après par câble d'entrée un câble multiligne situé côté source, c'est-à-dire relié à une source de données ou à un central, par câble de rocade un câble également multiligne de transmission d'un répartiteur à un autre, le plus souvent d'un étage à un autre ou éventuellement d'un immeuble à un autre , et par câble d'utilisateur un câble monoligne relié à une prise fixe d'utilisateur pour le raccordement d'un équipement.

Ces différents types de câbles peuvent tous être des câbles électriques à paires symétriques. Ils aboutissent sur l'arrière des répartiteurs. Les câbles desservant l'un des répartiteur sont raccordés à des connecteurs femelles avant montés sur des panneaux modulaires de brassage appartenant à ce répartiteur. Le raccordement d'un câble d'entrée ou de rocade à un autre câble de rocade ou d'utilisateur se fait par un cordon de brassage équipé de deux connecteurs mâles terminaux s'enfichant dans deux connecteurs femelles alors sélectionnés sur les panneaux de brassage du répartiteur.

En variante, les câbles d'entrée et d'utilisateur sont des câbles à paires symétriques, alors que les câbles de rocade sont des câbles à fibres optiques. Dans ces conditions, ces câbles optiques de rocade peuvent aboutir de part et d'autre à des circuits d'interface associés aux répartiteurs, pour assurer une conversion optique-électrique ou inverse et permettre une rationalisation de fabrication des connecteurs femelles des répartiteurs, qui sont alors identiques les uns aux autres dans les répartiteurs.

Le document EP-A- 0564 336 décrit un dispositif modulaire de terminaison de câbles électriques, qui est monté initialement sur chaque câble électrique pour une connexion ultérieure rapide du câble à un connecteur sur un panneau de brassage ou à une prise d'utilisateur, selon le type de câble concerné. Ce dispositif comporte un bloc, qui est muni de logements borgnes prévus pour les différents fils du câble, d'au moins une cavité débouchant dans ces logements et de fentes traversant chacune l'un des logements, et une pièce de blocage reçue dans chaque cavité et munie d'une languette flexible de rétention du fil inséré dans son logement.

La connexion ultérieure du câble à l'un des connecteurs d'un panneau de brassage ou à une prise d'utilisateur se fait simplement à l'aide de contacts autodénudants. Ceux-ci sont d'une part portés et reliés à un circuit imprimé et ont chacun leur extrémité autodénudante insérée dans l'une des fentes du dispositif de terminaison du câble pour être ainsi raccordés aux fils en place dans les logements respectifs. Ce circuit imprimé porte le connecteur ou la prise et est relié aux broches internes de ce connecteur ou de cette prise, qui sont accessibles par la face d'enfichage du connecteur ou prise.

Les connecteurs sur le panneau de brassage ou les prises d'utilisateur sont en particulier de type RJ 45.

Pour des raisons notamment de moindre coût d'installation des réseaux câblés, on préfère actuellement éviter d'équiper chaque câble de son dispositif de terminaison. Dans ces conditions, les fils de chaque ligne du câble sont alors directement reliés aux contacts autodénudants d'un connecteur de brassage ou d'une prise d'utilisateur. On prévoit alors un panneau ayant une partie arrière affectée à la fixation des câbles tandis que la partie avant est affectée au maintien des connecteurs.

Les opérations de fixation des câbles à la partie arrière du panneau de brassage et de raccordement de ces câbles aux connecteurs de ce panneau sont souvent longues et peu aisées. En outre, on constate que la partie arrière du panneau de brassage entraîne souvent des blessures ou exerce des contraintes excessives sur les câbles, selon que ceux-ci viennent du plancher ou du plafond.

La présente invention a pour but de résoudre ces problèmes.

Elle a pour objet un panneau modulaire de brassage, pour lignes de câbles de réseaux cablés, comportant un ensemble support définissant une partie avant sensiblement verticale et une partie arrière sensiblement horizontale et des connecteurs femelles, lesdits connecteurs étant d'une part montés de manière amovible sur ladite partie avant en étant accessibles sur une face avant de celle-ci et d'autre part reliés aux lignes des câbles fixés sur ladite partie arrière, caractérisé en ce que ledit ensemble support comporte deux supports rigides et allongés séparés l'un de l'autre et dits support avant et support arrière en correspondance avec lesdites parties avant et arrière ainsi définies, des colonnes rigides d'assemblage fixées audit support avant et saillantes perpendiculairement sur l'arrière de celui-ci, et des moyens de fixation amovibles dudit support arrière sur lesdites colonnes, ledit support avant étant muni d'ouvertures pour le maintien amovible de l'un desdits connecteurs dans l'une d'elles.

Ce panneau peut avantageusement présenter en outre au moins l'une des caractéristiques additionnelles suivantes :
- il comporte un profilé avant assemblé sur ledit support avant en recourant la face avant de celui-ci et muni d'ouvertures laissant accessibles à travers elles lesdits connecteurs montés sur ledit support avant.
- il comporte des éléments d'identification desdites lignes reliées auxdits connecteurs montés sur ledit support avant, lesdits éléments d'identification étant retenus sur la face avant du profilé en place sur ledit support avant et venant chacun entourer l'ouverture dans ledit profilé laissant accessible à travers elle le connecteur monté sur ledit support avant et relié à la ligne ainsi identifiée.
- il comporte des éléments d'obturation retenus sur la face avant du profilé en place sur ledit support avant et venant recouvrir l'ouverture dudit profilé en l'absence de connecteur accessible à travers celle-ci.
- ledit support arrière est une plaque allongée dont les deux bords longitudinaux sont repliés d'un même côté, en présentant des arêtes de pliage arrondies, et dont les portions terminales de ces bords sont repliées de l'autre côté et percées d'un trou, pour définir des paires de pattes opposées sur ledit support arrière, pour le maintien de celui-ci sur les colonnes.
- lesdits connecteurs comportent un corps avant de prise RJ 45, équipé de dents avant d'accrochage sur ledit support avant, un bornier arrière retenu sur l'arrière dudit corps avant et équipé intérieurement d'éléments de contact en deux rangées ayant chacun une portion arrière autodénudante et une portion avant en forme de ressort élastique, et une carte de circuit imprimé d'une part retenue dans ledit bornier entre les portions avant desdits éléments de contact, en ayant son circuit imprimé relié auxdits éléments de contact, et d'autre part reçue dans ledit corps avant de prise RJ 45, en ayant son circuit imprimé relié à des broches conductrices de cette prise.
- lesdites broches conductrices sont portées par un insert isolant lui-même monté sur une portion avant de la carte dudit circuit imprimé, en ayant lesdites broches d'une part reliées audit circuit imprimé et d'autre part saillantes en oblique en regard de l'insert et vers l'arrière de la carte de circuit imprimé et ainsi reçues dans ledit boîtier avant de prise RJ 45.

Les caractéristiques et avantages de la présente invention ressortiront de la description d'un mode préféré de réalisation donné à titre d'exemple non limitatif dans les dessins ci-annexés. Dans ces dessins :
- La figure 1 est une vue en perspective d'un panneau de brassage selon l'invention, sans les connecteurs montés sur celui-ci et les câbles raccordés aux connecteurs,
- La figure 2 est une vue en coupe du panneau de la figure 1, sur laquelle sont représentés un connecteur et un câble raccordé au connecteur et fixé au panneau,
- La figure 3 est une vue en coupe du connecteur précité,
- La figure 4 est une vue en perspective d'un panneau de brassage double hauteur, selon une variante donnée par rapport à la figure 1,
- La figure 5 est une vue en coupe d'un support avant du panneau de la figure 4.

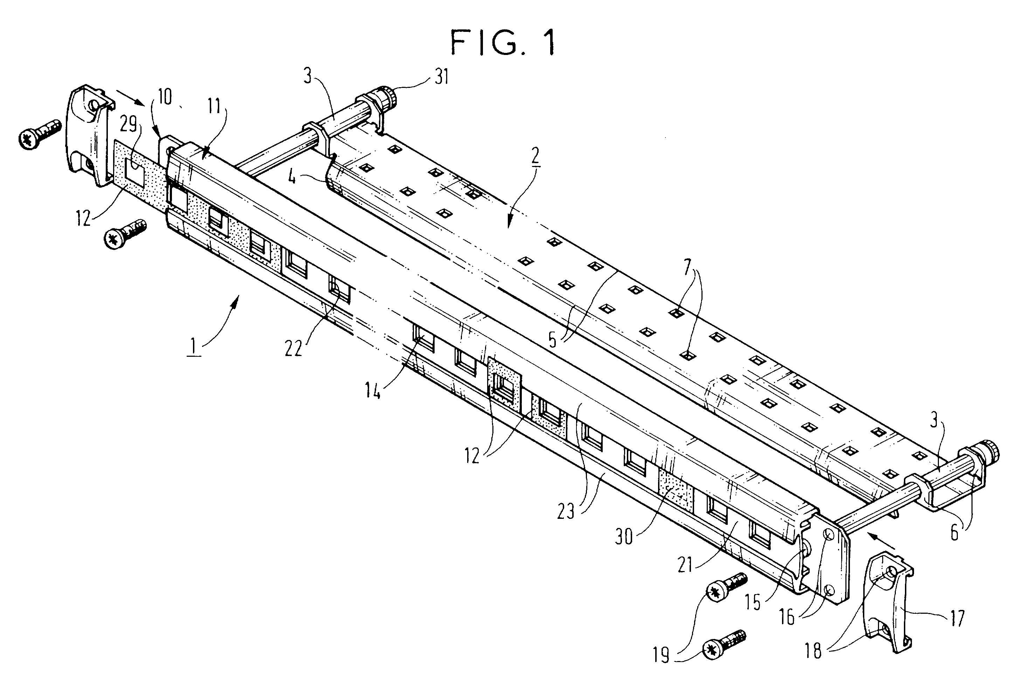

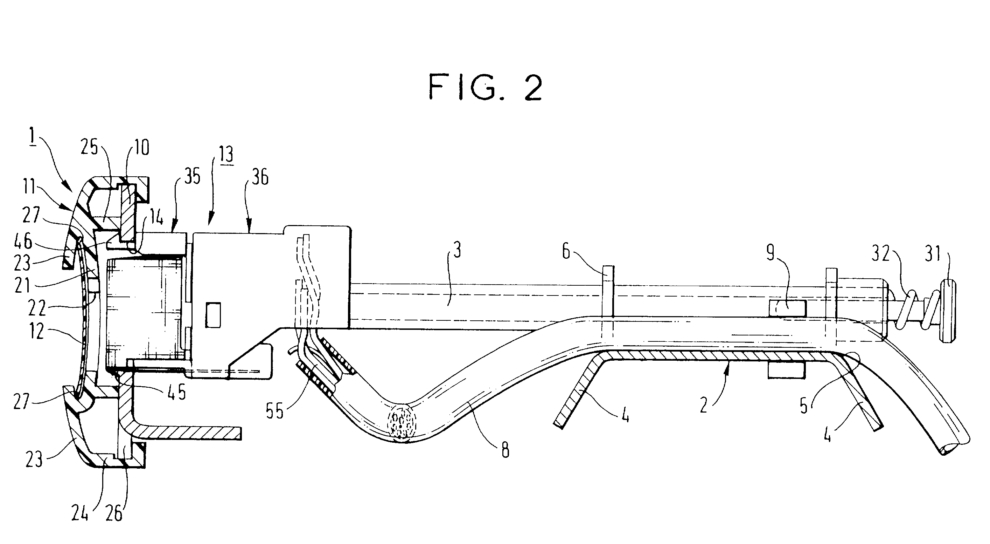

En se référant à la figure 1 ou 2, on voit que le panneau de brassage selon l'invention comporte un ensemble support ayant une partie avant verticale 1, une partie arrière horizontale 2 et deux colonnes horizontales 3 d'assemblage de la partie arrière à la partie avant.

La partie arrière 2 est une plaque métallique dite support arrière des câbles, dont les deux bords longitudinaux 4 sont pliés d'un même côté de la plaque initiale, en formant sur celle-ci deux arêtes de longitudinales de pliage arrondies 5, à l'exception des portions terminales de ces bords qui sont pliées de l'autre côté de la plaque initiale et définissent deux paires de pattes 6 de maintien du support 2. Chacune des pattes 6 est percée d'un trou, les trous de deux pattes 6 d'une même paire étant en vis à vis et recevant l'une des deux colonnes d'assemblage 3.

Le support arrière de câbles est ainsi de section transversale sensiblement en forme de U, pour présenter une bonne rigidité. Il comporte deux séries longitudinales de trous 7 réalisés à travers la base du U. Il assure la fixation de chaque câble tel que le câble 8 reçu selon la largeur du support et fixé sur l'extérieur de la base du U à l'aide d'un étrier serre-câble 9, lui-même fixé dans l'un des trous 7. Les arêtes arrondies de pliage 5, entre la base et les branches, évitent toute arête vive susceptible de blesser des câbles.

La partie avant 1 comporte une plaque métallique dite support avant 10 de connecteurs, un profilé en plastique 11 qui recouvre la face dite avant du support de connecteurs et est retenu sur ce support et des clips 12 d'identification des connecteurs tels que 13 quand ceux-ci sont en place sur le support 10. Ces clips 12 sont retenus sur le profilé.

Le support avant 10 des connecteurs est percé d'une série longitudinale d'ouvertures identiques 14 de réception et maintien dans chacune d'elles de la face avant dite d'enfichage de l'un des connecteurs. Il est prévu légèrement plus long que le support arrière 1 de câbles. Il porte sur ces deux portions terminales les deux colonnes d'assemblage 3, saillantes sur sa face arrière et fixées chacune à l'aide d'une vis 15 insérée par la face avant de la portion terminale de ce support avant 10. Il présente aussi sur chacune des deux portions terminales deux trous superposés 16, qui sont coiffés d'un embout 17 rapporté en face avant sur chaque portion terminale et muni lui-même de deux trous correspondants 18. Ces trous 16 et 18 servent à la fixation à l'aide de vis 19 du panneau de brassage sur deux montants verticaux, non représentés, d'une armoire, d'un châssis ou d'un coffret mural.

Le profilé plastique 11 et les deux embouts 17 recouvrent la face avant du support 10 de connecteurs, sur la longueur de celui-ci.

Ce profilé plastique 11 a sa partie longitudinale médiane 21 de forme arrondie, semi-cylindrique ou elliptique, dont la concavité est tournée vers l'avant quand le profilé est en place sur le support 10. Cette partie médiane comporte une série longitudinale d'ouvertures 22 d'accès à travers elles aux connecteurs retenus en place dans les ouvertures 14 du support 10.

Ce profilé plastique 11 a chacune de ses deux parties latérales situées de part et d'autre de la partie médiane 21, qui comporte une portion avant légèrement arrondie 23 dont la convexité est tournée vers l'avant et une portion arrière de retenue 24 pliée sur la portion avant. Il comporte en outre, sensiblement à la jonction de la partie médiane 21 et de chaque portion latérale avant, une patte arrière 25 d'appui sur le support 10. Les pattes arrière d'appui 25 sont reçues contre la face avant du support 10 quand les portions arrière de retenue 24 sont bloquées sur ce support 10. Ces portions arrière ont à cet effet leur bord terminal replié intérieurement. Le support 10, illustré de section en équerre sauf à ses extrémités, présente des pattes de crevage 26 prévues à la jonction de ses deux branches et solidaires de la branche verticale avant, pour le blocage derrière elles de l'une des deux portions arrière de retenue 24 du profilé 11.

Les deux portions avant 23 de part et d'autre de la partie médiane 21 du profilé 11 sont légèrement saillantes à l'avant de cette partie médiane 21. Elles définissent avec celle-ci deux goulottes longitudinales 27, pour la retenue des clips d'identification 12 des connecteurs retenus sur le support 10.

Ce profilé plastique 11 est de préférence en matériau plastique extrudé, résistant au feu mais pour autant avantageusement sans halogène.

Les clips d'identification 12 sont constitués par des éléments plats et flexibles, de forme rectangulaire et de couleur, qui sont indépendantes les uns des autres ou solidaires les uns des autres pour plusieurs d'entre eux constituant alors une bande. Ils sont montés amovibles sur le profilé 11, viennent entourer l'accès d'enfichage des connecteurs en place sur leur support 10 et sont à cet effet percés d'une fenêtre 29 se superposant sur l'une des ouvertures 22 du profilé 11.

La mise en place de chaque élément ou d'un groupe de plusieurs éléments d'identification solidaires se fait pour qu'il soit en appui contre la surface médiane 21 du profilé et entoure l'une ou plusieurs ouvertures successives 22, alors que ses deux bords opposés sont retenus dans les deux goulottes 27. Chaque élément entoure ainsi toute la périphérie de l'accès d'enfichage du connecteur en place sur le support 10, pour être parfaitement visible même lorsqu'un cordon de brassage est raccordé à ce connecteur porté par le support 10.

Le panneau de brassage peut également recevoir des éléments d'obturation 30, montés amovibles sur le profilé 11, de manière analogue aux éléments d'identification. Ces éléments d'obturation se distinguent des éléments d'identification par leur couleur et par l'absence de fenêtre pour que chacun recouvre et ferme l'ouverture 22 sur laquelle il s'étend. Chaque élément d'obturation vient recouvrir l'ouverture précitée, en l'absence de connecteur derrière cette ouverture ou en présence de connecteur derrière celle-ci mais non utilisé et ainsi protégé contre des poussières notamment.

Les colonnes d'assemblage 3 des supports 2 et 10 sont des tiges cylindriques alésées, dont l'alésage est fileté au moins sur ses parties terminales. Leur extrémité dite avant est fixée au support 10 par une vis telle que 15. La portion terminale arrière de chaque colonne est engagée dans le perçage de l'une des pattes de la paire correspondante de pattes 6 du support 2. L'extrémité arrière est retenue bloquée contre l'autre de ces pattes par une vis 31. Cette vis 31 est montée imperdable sur cette autre patte. Elle est sollicitée élastiquement par un ressort 32 monté autour d'elle et est ainsi reçue dans l'extrémité arrière de l'alésage de la colonne 3.

Les connecteurs reçus sur le panneau de brassage sont identiques les uns aux autres. Ces connecteurs comportent une prise avant de préférence de type RJ 45, pour le raccordement d'un cordon de brassage, et sont raccordés aux lignes de câbles des réseaux initialement câblés dans un immeuble à l'un quelconque de ces connecteurs.

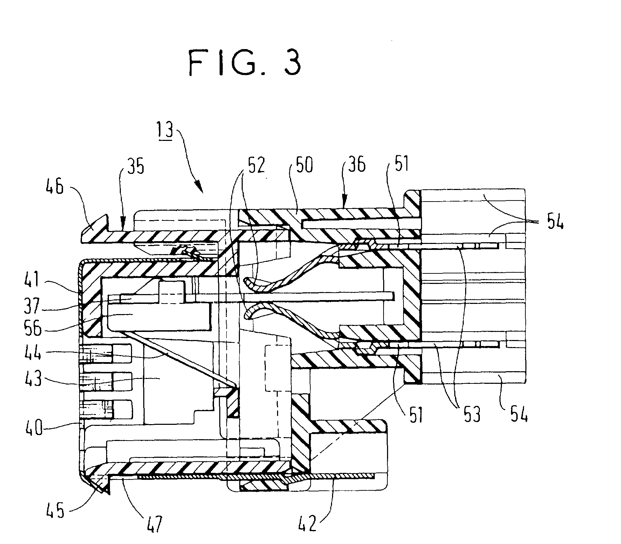

Le connecteur 13 est décrit en se référant à la figure 2 ou 3. Il comporte un boîtier avant isolant 35 de prise RJ 45, un bornier arrière 36 encliqueté sur la partie arrière du boîtier avant et une carte de circuit imprimé 37 s'étendant dans le boîtier avant et le bornier.

Le boîtier isolant 35 présente un accès d'enfichage 40 dans sa face dite avant, pour l'enfichage d'un connecteur mâle RJ 45 d'un cordon de brassage. Il a sa face arrière ouverte. Il porte un boîtier périphérique de blindage 41, recouvrant ses quatre faces latérales et la périphérie de l'accès d'enfichage de sa face avant. Ce boîtier de blindage 41 comporte une patte de raccordement de masse 42, qui est saillante au delà du boîtier 35 vers l'arrière, pour être reçue dans le bornier 36 tout en restant accessible.

Le boîtier isolant 35 comporte intérieurement une série sensiblement arrière de dents 43 de maintien séparé d'une série de broches individuelles 44 dans ce boîtier. Ces broches conductrices sont celles du connecteur 13 et sont accessibles depuis l'accès d'enfichage 40. Ce boîtier 35 comporte extérieurement, au niveau de la partie avant de ses faces latérales inférieure et supérieure, une dent rigide d'accrochage 45 définie sur le boîtier 35 et une dent flexible d'accrochage 46 définie en bout d'une patte flexible solidaire de la partie arrière du boîtier 35, pour la retenue du connecteur dans l'une des ouvertures du support avant 10. Le boîtier de blindage présente une fenêtre 47 pour le dégagement de la dent rigide d'accrochage 45, tandis que la dent flexible d'accrochage 46 reste extérieure à ce boîtier de blindage. Ce boîtier 35 présente sur la partie arrière de ses deux autres parois latérales des moyens non représentés pour la rétention du bornier 36 sur le boîtier avant 35.

Le bornier 36 comporte un corps isolant 50 dans lequel sont retenus huit éléments de contact 51, diposés en deux rangées et isolés les uns des autres. Ces éléments de contact ont leurs portions terminales avant 52 formant deux à deux quatre paires de pinces élastiques, qui reçoivent entre elles la carte de circuit imprimé 37 en étant raccordées à ce circuit imprimé. Ils ont leurs portions arrière 53 qui sont fendues pour être autodénudantes et sont accessibles à travers des fentes 54 dans la partie arrière des parois inférieure et supérieure du corps du bornier. Ces fentes 54 forment des guide-fils pour les fils 55 d'une ligne d'un câble à raccorder aux éléments de contacts 51.

La carte de circuit imprimé 37 a sa partie arrière reçue entre les éléments de contact et raccordée à ceux-ci. Elle porte par ailleurs sur sa partie avant un insert isolant 56 de rétention des huit broches électriques 44. Ces broches électriques sont d'une part retenues dans l'insert et entre celui-ci et la carte de circuit imprimé en étant reliées au circuit imprimé. Elles sont d'autre part saillantes en regard de l'insert, en s'étendant en oblique depuis le bord avant de celui-ci vers l'arrière de l'ensemble carte de circuit imprimé-insert, pour être reçues entre les dents 43 du boîtier isolant 35.

Lorsque chaque connecteur est mis en place sur le support avant 10, ce connecteur est saillant horizontalement sur l'arrière de ce support, avec les portions arrière autodénudantes 53 de ses éléments de contact 51 s'étendant horizontalement et accessibles sur l'arrière de ce connecteur. Les fils 55 d'une ligne ou du câble 8 sont ainsi aisés à relier au connecteur.

Le type de ligne ainsi reliée à ce connecteur 13 est alors repéré par l'élément d'identification 12 monté sur le profilé plastique avant 11.

Le panneau de brassage selon l'invention décrit ci-avant est un panneau simple hauteur, de constitution optimisée pour le raccordement très aisé des lignes d'un câble d'entrée ou de rocade ou de câbles d'utilisateurs aux connecteurs reçus sur ce panneau, comme pour la fixation rapide et aisée des câbles au panneau et pour les identifications sans problème des lignes desservant le panneau. Il permet la pose et la dépose des câbles avec les connecteurs auxquels ils sont raccordés. Il permet la fixation des câbles à leur support arrière pouvant être lui même fixé à un des supports avant quelconque de plusieurs panneaux, dans un châssis ou coffret de répartiteur, sans avoir à déposer les supports avant de ces panneaux.

On note aussi, en particulier en regard de la figure 1 ou 2, que le support arrière 2, dont le U est montré orienté vers le bas, est affecté à la fixation de câbles qui proviennent tous du bas c'est-à-dire du plancher et qui sont fixés sur l'extérieur de la base du U. Ce même support arrière 2 sera utilisé retourné, c'est-à-dire avec le U alors orienté vers le haut, pour être affecté à la fixation de câbles qui proviennent tous du plafond et sont fixés sur l'extérieur de la base du U.

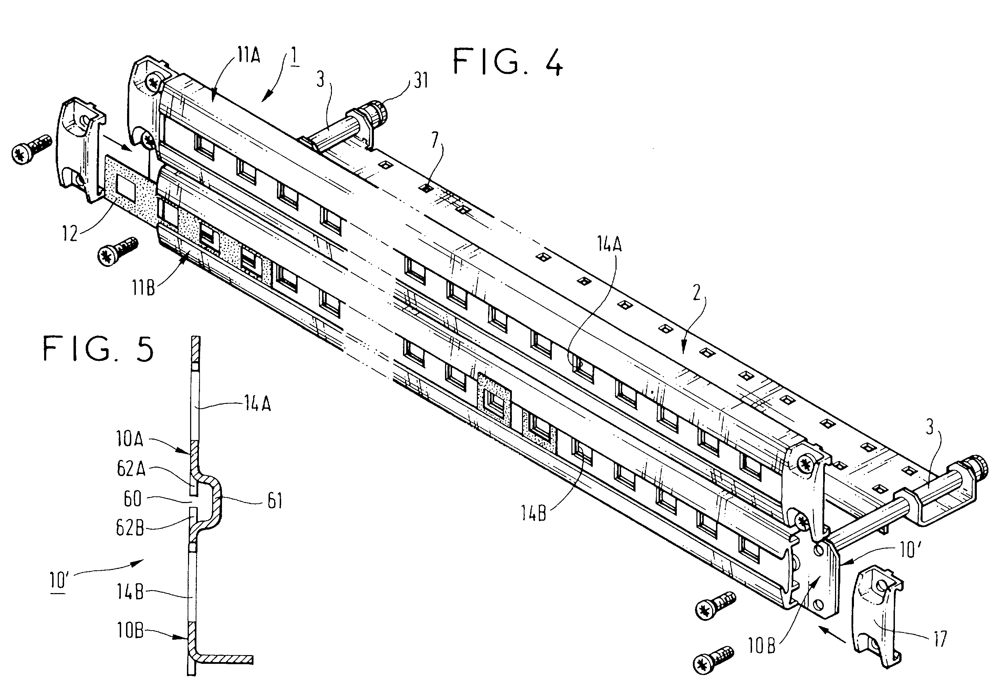

Le panneau de brassage selon la variante donnée dans la figure 4 est un panneau double hauteur par rapport à celui des figures 1 et 2. Les différences entre ce panneau double hauteur et celui simple hauteur des figures 1 et 2 sont seules précisées ci-après en se référant aux figures 4 et 5. Les connecteurs reçus sur ce panneau sont en particulier les mêmes que les précédents, leur nombre possible devenant double.

Le support avant 10' des connecteurs est de hauteur double pour être équivalent à deux supports avant 10 précités. Il est constitué par deux supports avant dits simple hauteur 10A et 10B qui sont l'un au dessus de l'autre. Ceux-ci sont d'une part séparés l'un de l'autre par des fentes 60 médianes non continues et d'autre part reliés l'un à l'autre par des déformations ou pliures en forme d'oméga 61. Ces pliures sont situées entre les fentes 60 et formées vers l'arrière du support résultant 10'. Ce support double hauteur 10' présente deux rangées d'ouvertures 14A et 14B pour la retenue de deux rangées de connecteurs dans celles-ci. On note que les deux bords 62A, 62B limitant chacune des fentes 60 dans la partie médiane du panneau double hauteur sont droits mais ont été tronqués en long pour permettre les pliages 61 dans les intervalles entre ces fentes.

La partie avant 1' du panneau double hauteur comporte deux profilés en plastique 11A et 11B, qui recouvrent la face avant du support double hauteur 10', c'est-à-dire les faces avant des supports 10A et 10B. Ces deux profilés sont identiques au profilé 11 précité, le bord inférieur de retenue du profilé supérieur 11A et le bord supérieur de retenue du profilé inférieur 11B s'accrochant sur les bords 62A et 62B des fentes 60.

On note au regard de la figure 4 que le panneau de brassage double hauteur ne comporte avantageusement qu'un seul support arrière 2, pour la fixation des câbles desservant ce panneau. Ce support arrière 2 est identique à celui du panneau de brassage simple hauteur. Il peut sélectivement être orienté pour que son U de section soit tourné vers le bas ou vers le haut.

En variante, on peut bien entendu fixer deux supports arrière tels que 2 au support avant 10' double hauteur, en donnant à chacun l'orientation souhaitée.

Dans le panneau décrit ci-avant en regard des dessins ci-annexés, les connecteurs sont des connecteurs électriques, avantageusement de type standard RJ 45, qui sont reliés aux lignes de câbles électriques ou peuvent être reliés aux lignes de câbles optiques alors à travers des convertisseurs d'interface. Bien entendu, en variante, les connecteurs peuvent être des connecteurs optiques, en particulier de type standard ST ou SC, qui sont alors reliés aux lignes de câbles optiques ou à travers des convertisseurs d'interface aux lignes de câbles électriques.

## Revendications

1. Panneau modulaire de brassage, pour lignes de câbles de réseaux câblés, comportant un ensemble support définissant une partie avant sensiblement verticale et une partie arrière sensiblement horizontale et des connecteurs femelles, lesdits connecteurs étant d'une part montés de manière amovible sur ladite partie avant en étant accessibles sur une face avant de celle-ci et d'autre part reliés aux lignes des câbles fixés sur ladite partie arrière, caractérisé en ce que ledit ensemble support comporte deux supports rigides et allongés (10, 2), séparés l'un de l'autre et dits support avant et support arrière en correspondance avec lesdites parties avant et arrière ainsi définies, des colonnes rigides d'assemblage (3) fixées audit support avant et saillantes perpendiculairement sur l'arrière de celui-ci, et des moyens de fixation amovibles (31, 32) dudit support arrière (2) sur lesdites colonnes (3), ledit support avant étant muni d'ouvertures (14) pour le maintien amovible de l'un desdits connecteurs (13) dans l'une d'elles.

2. Panneau selon la revendication 1, caractérisé en ce qu'il comporte un profilé avant (11), assemblé sur ledit support avant (10) en recouvrant la face avant de celui-ci et muni d'ouvertures (22) laissant accessibles à travers elles lesdits connecteurs montés sur ledit support avant.

3. Panneau selon la revendication 2, caractérisé en ce qu'il comporte des éléments d'identification (12) desdites lignes reliées auxdits connecteurs (13) montés sur ledit support avant (1), lesdits éléments d'identification (12) étant retenus sur la face avant du profilé en place sur ledit support avant et venant chacun entourer l'ouverture (22) dudit profilé laissant accessible à travers elle le connecteur monté sur ledit support avant et relié à la ligne ainsi identifiée.

4. Panneau selon la revendication 3, caractérisé en ce que ledit profilé comporte une partie médiane arquée (21), qui s'étend le long d'une série d'ouvertures (14) dans ledit support avant pour le maintien desdits connecteurs (13), a sa concavité tournée vers l'avant et présente également une série d'ouvertures se superposant sur celles dudit support avant, quand le profilé est en place sur ledit support avant, et comporte deux parties latérales (23), situées le long et de part et d'autre de ladite partie médiane et saillantes l'une et l'autre à l'avant de ladite partie médiane, et deux goulottes longitudinales (27) définies en vis à vis entre ladite partie médiane et lesdites parties latérales, lesdites goulottes assurant la rétention entre elles desdits éléments d'identification (12).

5. Panneau selon l'une des revendications 3 et 4, caractérisé en ce que ledit profilé (11) comporte des bords longitudinaux repliés (24), pour sa retenue sur ledit support avant.

6. Panneau selon l'une des revendications 3 à 5, caractérisé en ce qu'il comporte des éléments d'obturation (30) retenus sur la face avant du profilé en place sur ledit support avant et venant recouvrir l'ouverture (22) dudit profilé, en l'absence de connecteur accessible à travers celle-ci ou en présence de connecteur non utilisé et ainsi protégé.

7. Panneau selon l'une des revendications 2 à 6, caractérisé en ce que ledit profilé est en matériau plastique résistant au feu, de préférence sans halogène.

8. Panneau selon l'une des revendications 1 à 7, caractérisé en ce ledit support arrière (2) est en plaque allongée dont les deux bords longitudinaux (4) sont repliés d'un même côté, en présentant des arêtes de pliage arrondies, et dont les portions terminales de ces bords sont repliées de l'autre côté et percées d'un trou, pour définir des paires de pattes (6) opposées sur ledit support arrière, pour le maintien de celui-ci sur les colonnes (3).

9. Panneau selon la revendication 8, caractérisé en ce que lesdites colonnes (3) présentent un alésage fileté, tout au moins dans ses parties terminales opposées, et lesdits moyens de fixation amovible (31, 32) dudit support arrière sont constituées par des vis reçues dans les alésages filetés des colonnes et bloquées sur les pattes de maintien les plus arrière des paires de pattes dudit support arrière.

10. Panneau selon l'une des revendications 1 à 9, caractérisé en ce que lesdits connecteurs (13) comportent un boîtier avant (35) de prise RJ45 équipé de dents avant (45, 46) d'accrochage sur ledit support avant (10), un bornier arrière (36) retenu sur l'arrière dudit corps avant (35) et équipé intérieurement d'éléments de contact (51) en deux rangées, ayant chacun une portion arrière autodénudante (53) et une portion avant (52) en forme de ressort élastique, et une carte de circuit imprimé (37) d'une part retenue dans ledit bornier entre les portions avant (52) desdits éléments de contact (51), en ayant son circuit imprimé relié auxdits éléments de contact, et d'autre part reçue dans ledit boîtier avant (35) de prise RJ45, en ayant son circuit imprimé relié à des broches conductrices (44)de cette prise.

11. Panneau selon la revendication 10, caractérisé en ce que lesdites broches conductrices (44) sont portées par un insert isolant (56), lui-même monté sur une portion avant de la carte dudit circuit imprimé (37), en ayant lesdites broches d'une part reliées audit circuit imprimé et d'autre part saillantes en oblique en regard de l'insert et vers l'arrière de la carte de circuit imprimé et ainsi reçues dans ledit boîtier avant de prise RJ45.

12. Panneau selon la revendication 11, caractérisé en ce le boîtier avant (35) de prise RJ45 est recouvert d'un blindage (41), qui comporte une patte de raccordement de masse (42) saillante sur l'arrière dudit boîtier avant.

13. Panneau selon l'une des revendications 1 à 12, caractérisé en ce que ledit support avant (10') est dit de hauteur double, présente deux séries d'ouvertures (14) de maintien desdits connecteurs (13) et constitue deux supports avant simple hauteur (10A, 10B) d'une part séparés l'un de l'autre par des fentes discontinues (60) entre eux et d'autre part reliés l'un à l'autre par des pliures (61) réalisées entre les fentes et vers l'arrière de ceux-ci, et en ce que deux profilés (11A, 11B) sont montés sur l'un et l'autre desdits supports avant simple hauteur et retenus sur l'un des bords dudit support avant et l'un des bords de lesdites fentes discontinues.

14. Panneau selon la revendication 13, caractérisé en ce qu'il comporte un seul support arrière (2) fixé par lesdites colonnes audit support avant double hauteur (10')
